# EUROPEAN PATENT SPECIFICATION

(11) **EP 3 172 861 B1**
(45) Date of publication and mention of the grant of the patent: **22.05.2019**
(21) Application number: 15756703.3
(22) Date of filing: 23.07.2015
(51) Int. Cl.: H04L 12/24, H04L 29/06

(54) **GENERATING AND UTILIZING CONTEXTUAL NETWORK ANALYTICS**
ERZEUGUNG UND VERWENDUNG KONTEXTUELLER NETZWERKANALYTIK
PRODUCTION ET UTILISATION D'UNE ANALYSE DE RÉSEAU CONTEXTUELLE

(30) Priority: 24.07.2014 US 201414339564
(43) Date of publication of application: 31.05.2017
(73) Proprietor: Cisco Technology, Inc., San Jose, CA 95134 (US)
(72) Inventor: RAMAKRISHNAN, Sangeeta, San Jose, California 95134 (US); ZHU, Xiaoqing, San Jose, California 95134 (US)
(74) Representative: Kazi, Ilya
(86) International application number: PCT/US2015/041649
(87) International publication number: WO 2016/014737

(56) References cited:
- EP-A1- 2 530 870
- WO-A1-2012/055449
- US-A1- 2009 225 670
- US-A1- 2013 304 905
- US-A1- 2014 122 594
- HYUN JONG KIM ET AL: "The QoE Evaluation Method through the QoS-QoE Correlation Model", NETWORKED COMPUTING AND ADVANCED INFORMATION MANAGEMENT, 2008. NCM '08. FOURTH INTERNATIONAL CONFERENCE ON, IEEE, PISCATAWAY, NJ, USA, 2 September 2008 (2008-09-02), pages 719-725, XP031320361, ISBN: 978-0-7695-3322-3
- SHYAMPRASAD CHIKKERUR ET AL: "Objective Video Quality Assessment Methods: A Classification, Review, and Performance Comparison", IEEE TRANSACTIONS ON BROADCASTING, IEEE SERVICE CENTER, PISCATAWAY, NJ, US, vol. 57, no. 2, 1 June 2011 (2011-06-01), pages 165-182, XP011323558, ISSN: 0018-9316, DOI: 10.1109/TBC.2011.2104671

## Description

### TECHNICAL FIELD

The present disclosure relates to data networks, and in particular, to systems, methods and apparatuses enabling network management based on contextual quality indicators.

### BACKGROUND

The ongoing development of data networks includes improving access to media services and content offerings that emulate, enhance and/or replace services provided by other systems. For example, the surge in data-intensive video traffic signals both an enhancement of and a substitute for conventional broadcast cable access technologies. However, data-intensive traffic can strain existing network infrastructure and frustrate efforts to plan new infrastructure.

According to previously known network management practices a network is generally managed based on bandwidth utilization, with nominal levels of bandwidth allocated to client devices. Bandwidth allocations are often tied to a subscription tier model, where client devices in each tier receive a respective bandwidth allocation for a corresponding cost. Known *quality of service* (QoS) metrics for such methods are merely based on assessing whether client devices are provided with data throughput levels associated with the subscription tiers. Known QoS metrics do not provide any indication about the perceptual quality or the continuity with which media content is consumed at a client device for a particular subscription tier.

In networks that permit adaptive bit rate (ABR) streaming, metrics such as *bandwidth utilization* no longer provide meaningful information to network operators. ABR-enabled client devices operate to consume excess bandwidth irrespective of any noticeable gains in the perceptual quality for the ABR-enabled client devices. As such, while bandwidth utilization is often high, it fails to provide an accurate indication of the network capacity to deliver data-intensive traffic at acceptable perceptual quality levels to various subscribers.

In other words, network operators are blind to client-side experience conditions, despite being able to manage bandwidth allocations. As a result, network operators cannot adequately monitor and manage existing network infrastructure, adequately plan new infrastructure deployments, or adequately constrain the operation of ABR-enabled client devices that share network infrastructure resources in order to manage perceptual quality.

US 2014/0122594 A1 discloses a method and apparatus for determining user satisfaction with services provided in a communication network.

WO 2012/055449 A1 discloses service performance in communications network.

US 2013/0304905 A1 discloses a system and method for improved end-user experience by proactive management of an enterprise network.

EP 2530870 A1 discloses systems and methods for measuring quality of experience for media streaming.

US 2009/0225670 A1 discloses endpoint report aggregation in unified communications systems.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1A is a block diagram of a data communication environment in accordance with some implementations.
Figure 1B is a data flow diagram associated with methods of generating contextual quality indicator values in accordance with some implementations.
Figure 2 is a block diagram of a data link congestion model in accordance with some implementations.
Figure 3 is a block diagram of an example of a client device in accordance with some implementations.
Figure 4 is a block diagram of an example of a content server system in accordance with some implementations.
Figure 5 is a flowchart representation of a method of generating contextual quality indicator values in accordance with some implementations.
Figure 6 is a flowchart representation of a method of determining network performance characterization values in accordance with some implementations.
Figure 7 is a flowchart representation of a method of generating shared-resource traffic quality indicator values in accordance with some implementations.
Figure 8 is a flowchart representation of a method of admission control utilizing contextual quality indicators in accordance with some implementations.
Figure 9 is a flowchart representation of a method of network management utilizing contextual quality indicators in accordance with some implementations.
Figure 10 is a block diagram of an example of a network resource management system in accordance with some implementations.

In accordance with common practice various features shown in the drawings may not be drawn to scale, as the dimensions of various features may be arbitrarily expanded or reduced for clarity. Moreover, the drawings may not depict all of the aspects and/or variants of a given system, method or apparatus admitted by the specification. Finally, like reference numerals are used to denote like features throughout the figures.

### DESCRIPTION

Numerous details are described herein in order to provide a thorough understanding of the illustrative implementations shown in the accompanying drawings. However, the accompanying drawings merely show some example aspects of the present disclosure and are therefore not to be considered limiting. Those of ordinary skill in the art will appreciate from the present disclosure that other effective aspects and/or variants do not include all of the specific details of the example implementations described herein. Moreover, well-known systems, methods, components, devices and circuits have not been described in exhaustive detail so as not to obscure more pertinent aspects of the description herein.

### OVERVIEW

Previously available network management metrics fail to provide an indication of the capacity of a network to deliver data-intensive traffic at various perceptual quality levels. These metrics also fail to enable network management methods that utilize client-side network performance measures associated with the use of delivered media content data. By contrast, various implementations disclosed herein include systems, methods and apparatuses that generate one or more shared-resource traffic quality indicator values. Each shared-resource traffic quality indicator value characterizes at least a portion of a network by assessing network performance characterization values in relation to one or more capacity values of one or more shared network resources (e.g., bandwidth, processor time, memory, etc.). Each network performance characterization value provides a corresponding quantitative characterization of factors influencing quality of experience associated with the use of media content data received by a respective client device. In some implementations, quality of experience is characterized by at least one of a quantitative indication of the quality of media content data (e.g., peak-signal-to-noise ratio, mean opinion score, video quality metric, an encoding rate or the like) and an indication of the continuity with which media content data is used by a respective client device associated with a particular subscription tier. In some implementations, the continuity with which media content data is used refers to how fluidly streaming data is presented to the user. Fluidity can be adversely affected when a playout buffer in a client device does not receive new data at least as fast as data is being taken from the playout buffer. In other words, the playout buffer is underrun and presentation of streaming data may pause as the playout buffer is replenished.

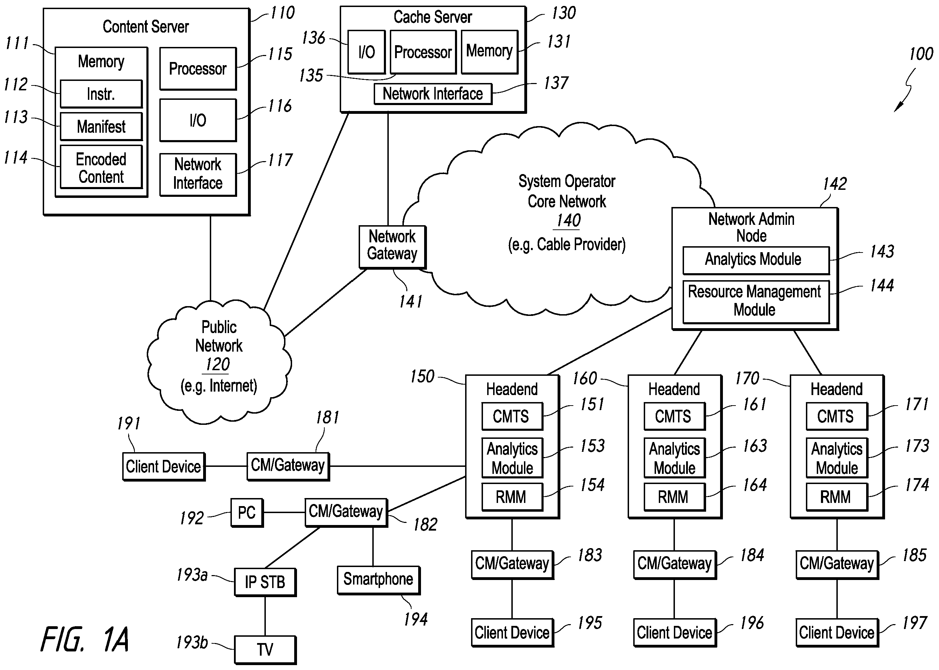

Figure 1A is a block diagram of a data communication environment 100 in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein. To that end, as a non-limiting example, the data communication environment 100 includes a public network 120 (e.g., a portion of the Internet), a system operator core network 140 (hereinafter "core network 140"), a content server 110, a cache server 130, and headend nodes 150, 160, 170. The data communication environment 100 also includes subscriber gateway devices 181, 182, 183, 184, 185 and a number of client devices 191, 192, 193a, 193b, 194, 195, 196, 197.

In some implementations, the core network 140 includes a private and/or subscription-based network. The core network 140 includes any LAN and/or WAN, such as an intranet, an extranet, a virtual private network, and/or portions of the Internet. In some implementations, the core network 140 provides communication capability between any one of the client devices 191, 192, 193a, 193b, 194, 195, 196, 197 and one or more third party service providers and/or content providers (e.g., content server 110, cache server 130, etc.). In some implementations, the core network 140 provides communication capability between any one of the client devices 191, 192, 193a, 193b, 194, 195, 196, 197 and one or more private content servers, storage devices, gateways and/or service servers (not shown), as well as core network provided services and content. In some implementations, the core network 140 uses HyperText Transport Protocol (HTTP) to transport information using the Transmission Control Protocol/Internet Protocol (TCP/IP). HTTP permits client devices to access various resources available via the core network 140 and/or the public network 120. However, implementations are not limited to the use of any particular protocol. One having ordinary skill in the art should understand that other networks distributing multimedia (e.g., video, graphics, audio, and/or data, or otherwise referred to also herein individually or collectively as media content or simply, content) may also benefit from certain embodiments of adaptive streaming systems and methods, and hence, are contemplated to be within the scope of the disclosure. The term "resource" in this specification refers to information, devices, infrastructure, and services. A resource includes, for example, bandwidth, processor time, data storage, data structures, non-transitory memory, images, video streams, network transactions, and computational objects. In various implementations, the core network 140 includes a combination of computing devices, switches, routers, server systems, enterprise memory, and data connections.

As shown in Figure 1A, in some implementations, the core network 140 includes a gateway node 141 that provides an interface for data communication external to the core network 140 (e.g., to the public network 120, the content server 110, the cache server 130, etc.). In some implementations, the gateway node 141 is provided as a single entity (e.g., a server, a virtual machine, etc.). In some implementations, the gateway node 141 is implemented as a distributed system including a suitable combination of software, data structures, virtual machines, computing devices, servers, switches and routers. For the sake of brevity and convenience of explanation, the gateway node 141 is described herein as a single entity.

The core network 140 also includes a network administration node 142 or the like, which is arranged to monitor and/or manage headend nodes. Similar to the gateway node 141, the network administration node 142 is illustrated as single entity (e.g., a server, virtual machine, etc.) in Figure 1A. In various implementations, however, the network administration node 142 is provided as a distributed system including a suitable combination of software, data structures, virtual machines, computing devices, servers, switches and routers. Merely for the sake of brevity and convenience of explanation, the network administration node 142 is described herein as a single entity.

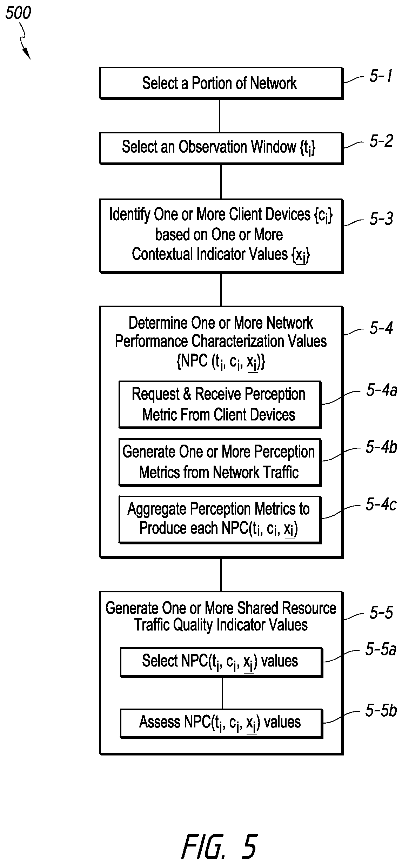

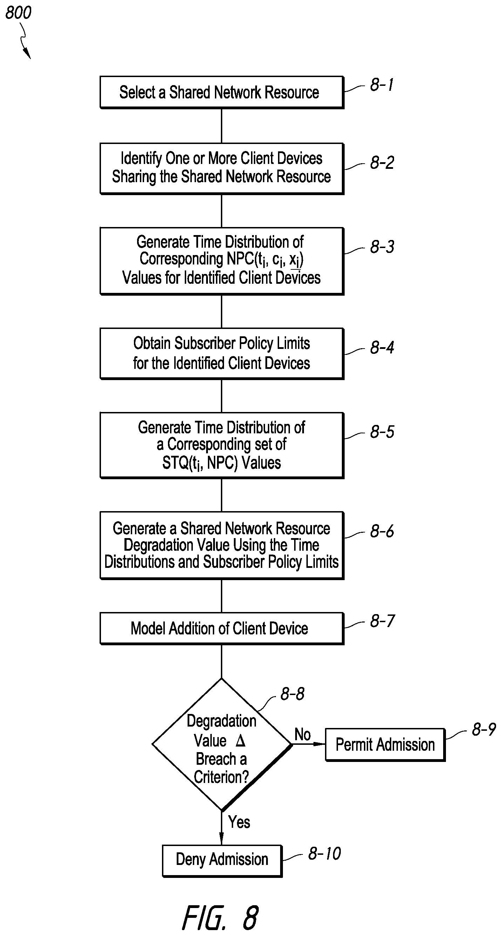

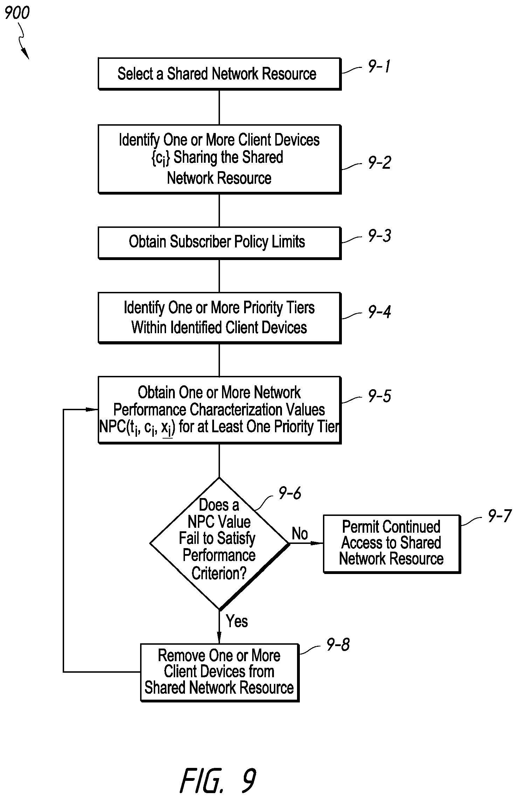

In some implementations, the network administration node 142 includes at least one of an analytics module 143 and a resource management module 144. As described below with reference to Figures 5-7, the analytics module 143 is provided to generate one or more shared-resource traffic quality indicator values. As described below with reference to Figures 8 and 9, the resource management module 144 is configured to determine whether a portion of a network has capacity to deliver data-intensive traffic at various perceptual quality levels (i.e., quality-based network capacity). In some implementations, the resource management module 144 is configured to use one or more shared-resource traffic quality indicator values in order to determine quality-based network capacity. The analytics module 143 and the resource management module 144 are not limited to implementation in or proximate to the network administration node 142. In various implementations, modules similar to one or both are included in headend nodes or other bottleneck points. For example, in some implementations, modules similar to one or both are included in one or more of a mobile network, a mobile packet core, a WiF access point, a cable modem and a residential gateway device.

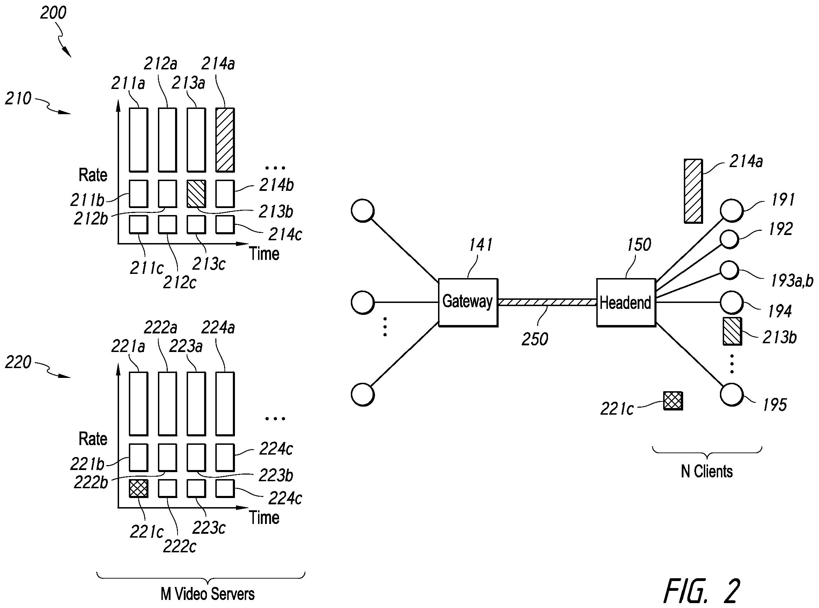

Each headend node 150, 160, 170 is coupled to the network administration node 142 and/or one or more other portions of the core network 140. In some implementations, the headend nodes 150, 160, 170 are capable of data communication using the public network 120 and/or other private networks (not shown). Those of ordinary skill in the art will appreciate that a headend node is typically configured to deliver cable TV, cable modem services and/or various other data services to subscriber client devices. To that end, a headend node includes a suitable combination of software, data structures, virtual machines, routers, switches and high-availability servers. For example, the headend node 150 includes a cable modem termination server (CMTS) 151 that is used to service an allocation of bandwidth shared by a number of client devices. The CMTS 151 includes a suitable combination of hardware, software and firmware for terminating one or more data channels associated with a number of client devices within the shared allocation of bandwidth. In some implementations, the headend node 150 includes at least one of an analytics module 153 and a resource management module (RMM) 154. As described below with reference to Figure 2, the analytics module 153 is configured to generate one or more shared-resource traffic quality indicator values associated with the traffic on bandwidth available through and managed by the headend node 150. In some implementations, the resource management module 154 is configured to determine whether a portion of the network has capacity to deliver data-intensive traffic at various perceptual quality levels to client devices sharing bandwidth (or other resources) available through the headend node 150. Further, while the analytics module 153 and the resource management module 154 are shown as distinct modules, in some implementations, some or all of the functions of each are incorporated into a CMTS or the like. Similar to the headend node 150, the headend node 160 includes a CMTS 161, an analytics module 163 and a resource management module (RMM) 164; and, the headend node 170 includes a CMTS 171, an analytics module 173 and a resource management module (RMM) 174.

Client devices access network resources, services and content offerings from a respective headend node through subscriber gateway devices. For example, as shown in Figure 1A, the subscriber gateway devices 181, 182, 183 are coupled to the headend node 150, and thus share bandwidth (and/or other resources) provided by the headend node 150. Similarly, the subscriber gateway device 184 is coupled to the headend node 160, and the subscriber gateway device 185 is coupled to the headend node 170. In various implementations, a subscriber gateway device includes, without limitation, devices such as cable modems (CM), wireless access points, and Ethernet modems.

Each subscriber gateway device 181, 182, 183, 184, 185 is accessible by and services a number of client devices. For example, the client device 191 is coupled to the subscriber gateway device 181, the client device 195 is coupled to the subscriber gateway device 183, the client device 196 is coupled to the subscriber gateway device 184, and the client device 197 is coupled to the subscriber gateway device 185. The subscriber gateway device 182 delivers service and/or content to PC 192, smartphone 194, and an IP set-top box (STB) 193a, which in turn is coupled to TV 193b. So the bandwidth allocated to the subscriber gateway device 182 is shared by three devices in the example shown. The bandwidth allocated to the subscriber gateway device 182 is also a portion of the available bandwidth provided by the headend node 150. The headend node 150 also provides bandwidth allocations to the subscriber gateway devices 181, 183, which service respective client devices 191, 195. Thus, in this example, the total bandwidth available from the headend node 150 is ultimately shared by five client devices 191, 192, 193a/b, 194 and 195. Those of ordinary skill in the art will appreciate from the present disclosure that, in various implementations, a headend node can be connected to any number and combination of gateway nodes and client devices, and Figure 1A is merely an example provided to discuss aspects of various implementations.

Referring again to Figure 1A, the content server 110 is configured to store and provide media content data. To that end, the content server 110 typically includes a non-transitory memory 111, a processor 115, an input-output (I/O) interface 116, and a network interface 117. The network interface 117 is configured to enable communication with other devices and systems, and for example, without limitation includes a modulator/demodulator (modem for communication with another device, system, or network), a radio frequency transceiver or another type of transceiver, a telephone interface, a bridge, a router, etc. In some implementations, the I/O interface 116 includes input devices, such as but not limited to, a keyboard, mouse, scanner, microphone, etc. The I/O interface 116 may also include output devices, such but not limited to, a display, speakers, etc.

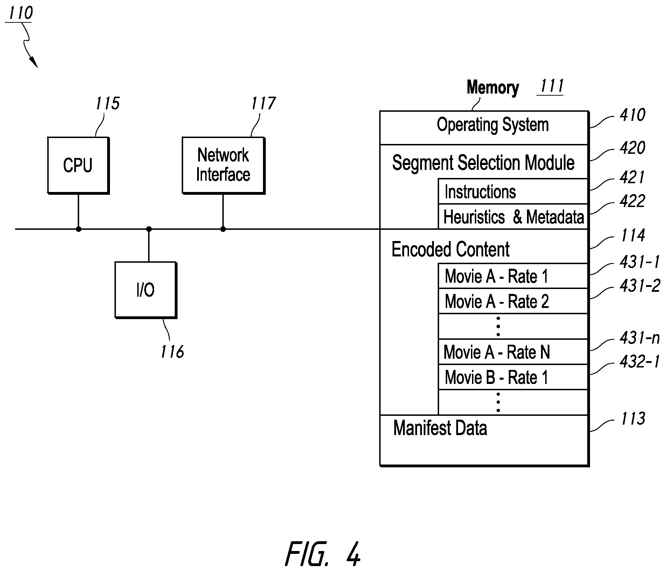

Figure 4 is a block diagram of an example implementation of the content server system 110 of Figure 1A in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the content server system 110 includes one or more processing units (CPU's) 115, a network interface 117, a memory 111, and a local I/O interface 116. The memory 111 includes an operating system 410, which includes implementations of procedures for handling various basic system services and for performing hardware dependent tasks.

With reference to Figures 1A and 4, the memory 111 includes instructions112 (421 in Figure 4), a manifest 113 and encoded media content data 114. With reference to Figure 1A, in some implementations, the instructions 112 enable the selection of one or more encoding rate representations and/or one or more temporal segments of a media content data item in response to a request from a client device. With reference to Figure 4, in some implementations the content server 110 also includes a segment selection module 420. The segment selection module 420 includes instructions 421 and heuristics and metadata 421. In some implementations, the instructions 421 in combination with the heuristics and metadata 421 enable the selection of one or more encoding rate representations and/or one or more temporal segments of a media content data item in response to a request from a client device. In some implementations, the encoded media content data 114 includes multiple representations of each of one or more media content data items. For example, as shown in Figure 4, the encoded media content data 114 includes data representing two movies, namely Movie A and Movie B, as example media content data items. Those of ordinary skill in the art will appreciate that various other types of media content data include without limitation sports video, newscasts, music and concert videos, and various other types of TV programs, audio files and video games. The encoded content 114 includes multiple representations 431-1, 431-2, ..., 431-n of Movie A, that are each encoded at a different bit rate than the other representations. Similarly, one of many representations of Movie B, indicated by 432-1, is also illustrated in furtherance of the example. In some implementations, a representation of a media content data item is divided into one or temporal segments. In some implementations, the manifest 113 includes metadata associated with each of the encoding rate representations and/or the temporal segments of the one or more media content data items. For example, the manifest includes at least one of a respective encoding rate indicator, a quality level indicator, and a duration indicator for each representation of the one or more media content data items. In some implementations, a quality level indicator is explicitly indicated (e.g., as opposed to being inferred from bit rate), with the explicit indication corresponding to a perceptual playback quality metric such as mean square error (MSE), peak signal-to-noise ratio (PSNR), mean opinion score (MOS), relative degradation, or other well-known quality metrics.

The cache server 130 is configured to provide replicas of at least some of the media content data and associated metadata stored and provided by the content server 110. In various implementations, the cache server 130 is similarly configured to the content server 110, and includes, without limitation, a processor 135, a non-transitory memory 131, a network interface 137, and I/O interface 136. In some implementations, a request for media content data item from a client device is initially directed to or redirected to the cache server 130, when the cache server 130 is closer to the client device than the content server 100. The cache server 130 can also be used to supplement the content server 110 during time of excessive traffic.

Although Figure 1A illustrates a number of discrete elements, Figure 1A is intended to highlight various aspects of a network rather than to serve as a schematic strictly indicative of various network implementations. Thus, in various implementations, a network includes a subset or superset of the elements illustrated in Figure 1A. As such, a combination of elements could be implemented by a single element and some singular elements could be implemented by one or more elements. The number of elements and how various features and functions are allocated can vary between implementations, and may depend in part on the amount of traffic a network is configured to handle during various usage periods (e.g., peak, average, low, etc.).

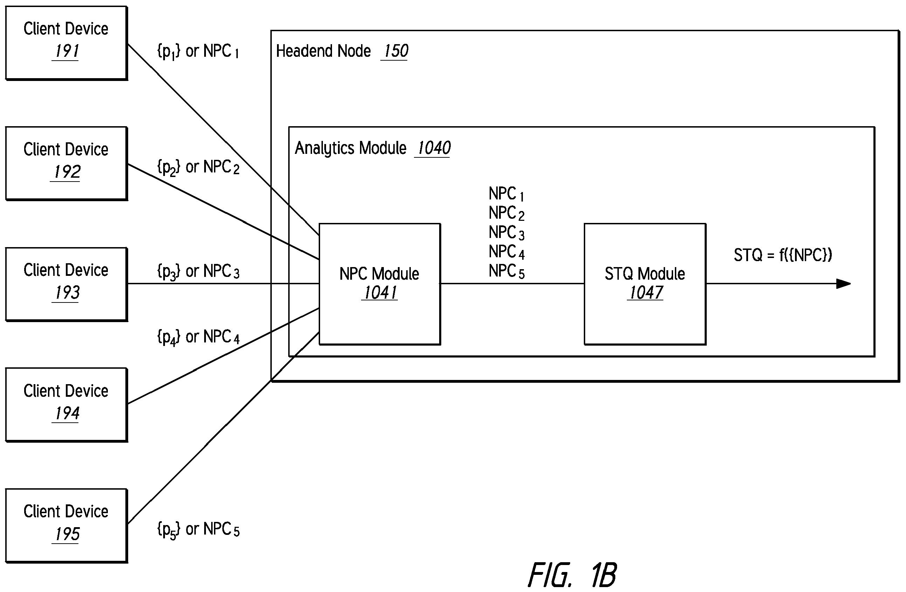

In operation, various encoding rate representations of media content data items can be provided to client devices (e.g., client device 191) in a number of ways. For example, in ABR-enabled systems, a media content item (e.g., a particular movie, sportscast, etc.) is typically sub-divided into temporal segments (e.g., 2-10 seconds long) that are each encoded at respective bit rates. To that end, multiple representations of each segment are stored and made available by the content server 110 to client devices. The encoding bit rate of each segment representation at least in part characterizes the perceptual quality of the segment representation. Since each representation of a segment is encoded at a different bit rate, each representation has a different amount of data, and thus uses a different combination of bandwidth and time for transmission. Additionally, a variety of storage structures can be used for ABR media content data, such as directories with individual files for each segment, standardized file formats, and/or custom packaging schemes. In some implementations, the structure of the media content data, along with associated metadata associated with each segment, is contained in a separate structure, referred to as a manifest (e.g., manifest data 113 in Figures 1 and 4).

An ABR-enabled client device selects and transmits a request (e.g., a HTTP GET command) for a specific representation of a segment from the content server 110. The selection decision is based on various parameters including the bandwidth allocated to the client device and the amount of data currently residing in a playout buffer of the client device. In accordance with previously known ABR client device methods, there is a general bias towards enabling a client device to consume as much bandwidth as is available to the client device. As a result, an ABR-enabled client device typically operates to select representations of segments with high encoding rates so that the client device consumes the bandwidth allocated to it based on an associated subscription tier. The typical ABR-enabled client device is also biased towards consuming bandwidth in excess of the allocation provided under the associated subscription tier.

Such previously known ABR methods are provided to increase utilization of bandwidth and/or other resources. A drawback of these methods is that they do not consider or determine whether actual quality of experience improvements, if any, achieved by an ABR-enabled client device justify the bias towards consuming available bandwidth. For example, a client device may select a 10 Mbps representation of a video stream segment over a 6 Mbps representation of the same video stream segment. However, depending on the content of the video stream segment (e.g., a movie scene with fast moving action versus a scene with mainly dialogue and little movement), the end user may not perceive an appreciable difference in playback quality. Without such an appreciable difference, the additional 4 Mbps bandwidth (or equivalently time) used to receive the 10 Mbps segment representation is misused, and could be utilized more productively. The cumulative impact on a link with a number of ABR-enable clients creates a management blind-spot for network operators attempting to determine the actual capacity of a link to handle data-intensive traffic at various perceptual quality levels.

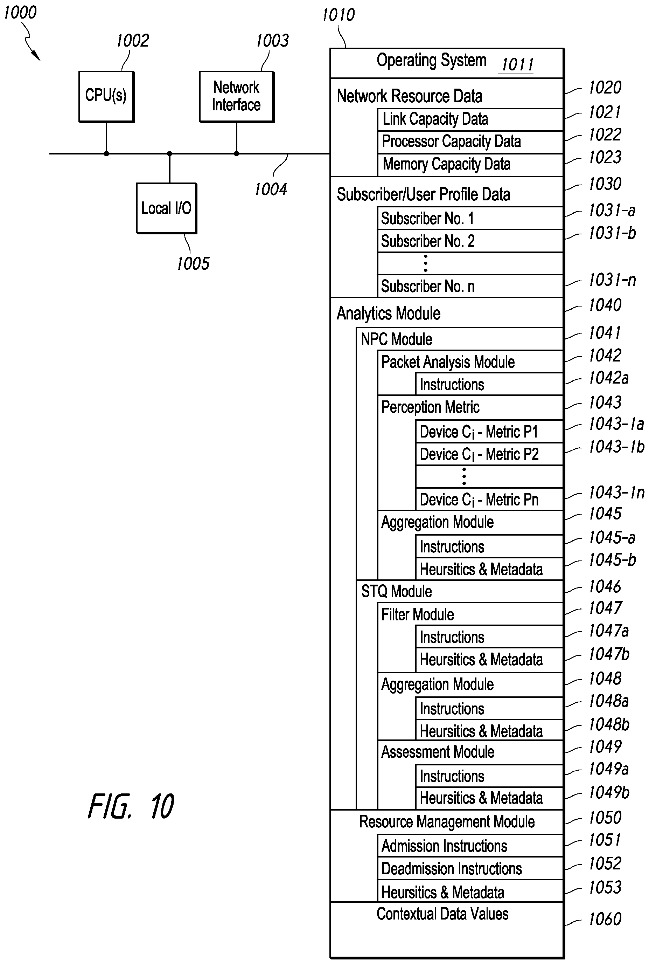

Figure 1B is a data flow diagram associated with Figure 1A in accordance with some implementations. As described in greater detail below, Figure 1B illustrates the origination and/or flow of perception metrics {*pᵢ*} and/or network performance characterization values {*NPC*(*tᵢ, cᵢ, x*ᵢ)} from client devices 191, 192, 193a/b, 194 and 195 through to components of the headend node 150. In some implementations, the headend node 150, as described below with reference to Figure 10, includes an analytics module 1040. The analytics module 1040 includes a network performance characterization (NPC) module 1041 and a shared-resource traffic quality indicator (STQ) module 1046, which are also described in greater detail below.

Figure 2 is a block diagram of a data link congestion model 200 that illustrates the issues described above. The data link congestion model 200 shown in Figure 2 is similar to an adapted from the data communication environment 100 provided in Figure 1A. Elements common to Figures 1 and 2 include common reference numbers, and only the differences between Figures 1 and 2 are described herein for the sake of brevity. To that end, the congestion model 200 includes a link 250 providing a shared allocation of bandwidth between the gateway node 141 and headend node 150. The headend node 150 is ultimately coupled to the five client devices 191, 192, 193a/b, 194 and 195 as illustrated in Figure 1A. Thus, in this example and in Figure 1A, the total bandwidth available through the headend node 150 on link 250 is ultimately shared by the five client devices 191, 192, 193a/b, 194 and 195.

The congestion model 200 in Figure 2 also includes first and second media content data items 210, 220 stored at M video servers (not shown). The first media content data item 210 includes a first set of segment representations 211a,b,c, a second set of segment representations 212a,b,c, a third set of segment representations 213a,b,c, and a fourth set of segment representations 214a,b,c. The first set of segment representations 211a,b,c includes segment representations for a first temporal segment of the first media content data item 210. Similarly, the second, third and fourth sets of segment representations (212a,b,c, 213a,b,c, 214a,b,c) are for respective second, third and fourth temporal segments of the first media content data item 210. The second media content data item 220 includes a first set of segment representations 221a,b,c, a second set of segment representations 222a,b,c, a third set of segment representations 223a,b,c, and a fourth set of segment representations 224a,b,c. The first, second, third and fourth sets of segment representations (221a,b,c, 222a,b,c, 223a,b,c, 224a,b,c) are for respective first, second, third and fourth temporal segments of the second media content data item 220.

In operation, the five client devices 191, 192, 193a/b, 194 and 195 are each able to select segment representations. In some implementations, a client device selects a temporal segment based on a respective portion of the bandwidth on link 250 allocated to the client device. For example, as shown in Figure 2, the client device 191 selects segment representation 214a, corresponding to the highest encoding rate available for the fourth temporal segment of the first media content data item 210. The client device 194 selects segment representation 213b, corresponding to the middle encoding rate available for the third temporal segment of the first media content data item 210. And, the client device 195 selects segment representation 221c, corresponding to the middle encoding rate available for the third temporal segment of the second media content data item 220. Additionally, in ABR-enabled implementations, a client device is able to exceed the bandwidth allocated to it when other portions of the bandwidth on link 250 are underutilized, and thus select segment representations with higher encoding rates that are normally supported by the bandwidth nominally allocation to the client device.

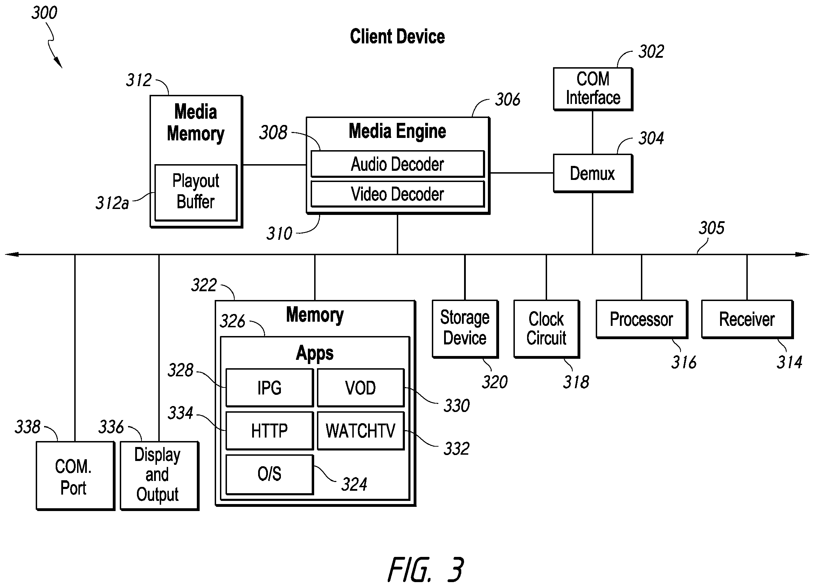

Client devices generally include any suitable computing device, such as a computer, a laptop computer, a tablet device, a netbook, an internet kiosk, a personal digital assistant, a mobile phone, a smartphone, a gaming device, a computer server, etc. In some implementations, each client device includes one or more processors, one or more types of memory, a display and/or other user interface components such as a keyboard, a touch screen display, a mouse, a track-pad, a digital camera and/or any number of supplemental devices to add functionality. As an example, Figure 3, a block diagram of a configuration of a client device 300 in accordance with some implementations. While pertinent features are illustrated, those of ordinary skill in the art will appreciate from the present disclosure that various other features have not been illustrated for the sake of brevity and so as not to obscure more pertinent aspects of the example implementations disclosed herein.

In some implementations, the client device includes a suitable combination of hardware, software and firmware configured to provide at least some of protocol processing, modulation, demodulation, data buffering, power control, routing, switching, clock recovery, amplification, decoding, and error control. In some implementations, at least a portion of the control module and at least a portion of the plurality of optical communication devices are provided on a first substrate. For example, the client device 300 includes a communication interface 302. In some implementations, the communication interface 302 is suitable for communication over, among others, an IP network, a coaxial cable network, an HFC network, and/or wireless network. The communication interface 302 is coupled to a demultiplexer (demux) 304. The demux 304 is configured to parse the metadata (e.g., in the packet header or in the manifest) of segment representations and the body or payload data of the same. Metadata includes, for example, timestamp information, packet identifiers, program numbers, quality level, and/or other information useful for decoding and utilizing a received segment representation. The segment data and metadata information is provided to a media engine 306 as explained further below.

Although client device 300 is described in the context of various internet video streaming implementations, such as IPTV and VoD, the client device 300 may comprise additional and/or different components in various other implementations. For instance, in some implementations, the client device 300 includes a tuner system (e.g., radio frequency tuning, not shown) coupled to communication interface 302. In some implementations, a tuner system includes one or more tuners for receiving transport streams received via communication interface 302. Additionally and/or alternatively, in some implementations, a demodulator is employed to demodulate the received carrier signal and the demux 304 is configured to parse the transport stream packets of one or more defined carrier frequencies.

As shown in Figure 3, the demux 304 is coupled to a bus 305 and to media engine 306 (i.e. an audio/video (A/V) processing or decoding device). The media engine 306 includes decoding logic including, for example, at least one of an audio decoder 308 and a video decoder 310. The media engine 306 also includes buffer management functionality to facilitate a determination as to current buffer level within the client device 300. The media engine 306 is further coupled to bus 305 and to a media memory 312. The media memory 312 includes one or more buffers (e.g. playout buffers) for temporarily storing compressed and/or reconstructed pictures and/or audio frames. In some implementations, the buffers of media memory 312 and/or other buffers (e.g., network buffers) reside in other memory devices, or distributed among media memory 312 and memory 322.

In some implementations, the client device 300 includes additional components coupled to bus 305. For example, the client device 300 also includes a receiver 314 configured to receive user input. In some implementations, the client device 300 includes a processor 316 for executing and managing operations of the client device 300. In some implementations, the client device 300 includes a clock circuit 318 comprising phase and/or frequency locked-loop circuitry (or software, or combination of hardware and software) configured to synchronize clock information received in an audio, video, or A/V stream to facilitate decoding operations and to clock the output of reconstructed audiovisual content.

In some implementations, the client device 300 also includes a storage device 320 (and associated control logic) provided to temporarily store buffered content and/or to more permanently store recorded content. The memory 322 includes at least one of volatile and/or non-volatile memory, and is configured to store executable instructions or computer code associated with an operating system (O/S) 324, one or more applications 326 (e.g., an interactive programming guide (IPG) 328, a video-on-demand (VoD) app 330, a WatchTV app 332 (associated with broadcast network TV), HTTP logic 334, among other applications such as pay-per-view, music, personal video recording (PVR), driver software, etc. In some implementations, profile selection logic includes HTTP client functionality, and may generate requests for segment representation from a content server (e.g., content server 110).

The client device 300 may be further configured with display and output logic 336, as indicated above that may include graphics and video processing pipelines, among other circuitry to process the decoded pictures and associated audio and provide for presentation (e.g., display) on, or associated with, a display device or other media device. A communications port 338 (or ports) may further be included in the client device 300 for receiving information from and transmitting information to other devices. For instance, communication port 338 may feature USB (Universal Serial Bus), Ethernet, IEEE-1394, serial, and/or parallel ports, etc. In addition, communications port 338 may be configured for home networks (e.g., HPNA/MoCA, etc.). The client device 300 may also include an analog video input port for receiving analog video signals.

Figure 5 is a flowchart representation of a method 500 of generating contextual quality indicator values for at least a portion of a network according to some implementations. In some implementations, the method 500 is performed by an analytics module associated with a network administration node (e.g., network administration node 142) and/or a resource bottleneck node (e.g., headend node 150, gateway 182, etc.). Briefly, the method 500 includes determining network performance characterization values for client devices sharing a network resource, and using the determined network performance characterization values to generate one or more shared-resource traffic quality indicators. In some implementations, the one or more shared-resource traffic quality indicators characterize the capacity of a network to deliver data-intensive traffic at various perceptual quality levels to a number of client devices.

To that end, as represented by block 5-1, the method 500 includes selecting at least a portion of a network within which to determine the plurality of network performance characterization values and generate the one or more shared-resource traffic quality indicator values. For example, with reference to Figure 1A, the analytics module 143 selects portion of the network administered by the headend nodes 150 and 160, and excludes the portion administered by the headend node 170. In another example, the analytics module 153 selects the bandwidth provided through the headend node 150, and/or selects individually or in combination portions of bandwidth allocated to one or more client devices {*cᵢ*} through the respective gateway devices 181, 182, 183.

As represented by block 5-2, the method 500 includes selecting an observation window *tᵢ* during which to determine the plurality of network performance characterization values and generate the one or more shared-resource traffic quality indicator values. As represented by block 5-3, the method 500 includes identifying one or more client devices {*cᵢ*}, that share a resource on the selected portion of the network, using one or more contextual indicator values *xᵢ*. In some implementations, a contextual indicator value *xᵢ* includes geographic data (e.g., service-area groupings, distribution of infrastructure assets, etc.), content-type data (e.g., TV show identifiers, etc.) and subscriber data (e.g., income levels, usage data, etc.). For example, with reference to Figures 1A, 1B and 2, the analytics module 153 identifies the five client devices 191, 192, 193a/b, 194 and 195 that share bandwidth available through the headend node 150. In another example, the analytics module 153 identifies client devices 191, 193a/b, and 195 because each is receiving the same video stream during an observation window *tᵢ*.

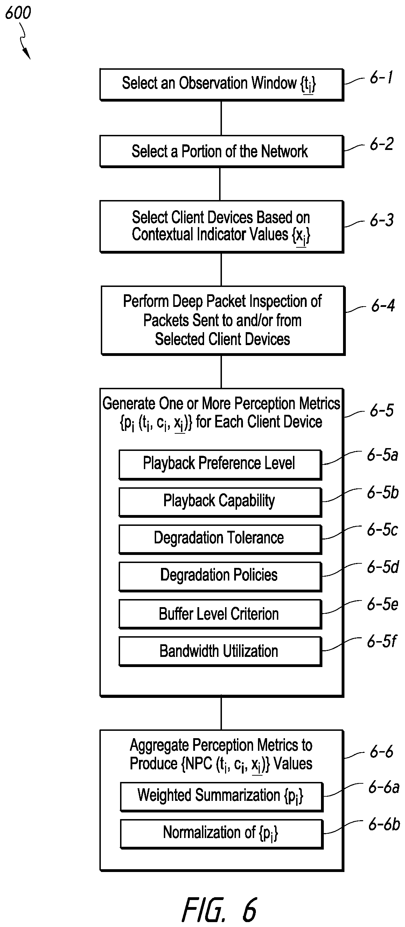

As represented by block 5-4, the method 500 includes determining a number of network performance characterization values {*NPC*(*tᵢ*, *cᵢ*, *xᵢ*)} for the identified client devices {*cᵢ*}. For example, with reference to Figure 1B, NPC values (i.e., NPC₁, NPC₂, NPC₃, NPC₄, NPC₅) are determined for the five client devices 191, 192, 193a/b, 194 and 195. In some implementations, a network performance characterization value *NPC*(*tᵢ, cᵢ*, *xᵢ*) provides a corresponding quantitative characterization of a quality of experience associated with the use of media content data on a respective client device *cᵢ*. In some implementations, quality of experience is characterized by at least one of an indication of the perceptual quality of media content data (e.g., using a peak-signal-to-noise ratio value, mean opinion score, video quality metric, or the like) and an indication of the continuity with which media content data is processed and played by a respective client device associated with a particular subscription tier. Each perception metric *pᵢ* quantitatively characterizes a factor that directly or indirectly impacts quality of experience associated with the use of media content data by a respective client device, including perceptual quality of the media content data and continuity with which media content data is used. As represented by block 5-4a, for example, determining a number of network performance characterization values {*NPC*(*tᵢ*, *cᵢ*, *xᵢ*)} includes requesting and receiving at least one perception metric *pᵢ* from at least some of the identified client devices {*cᵢ*}. For example, with reference to Figure 1B, corresponding sets of perception metrics {*p₁*}*,* {*p₂*}*,* {*p₃*}*,* {*p₄*}*,* {*p₅*} are requested and received from the five client devices 191, 192, 193a/b, 194 and 195. Additionally and/or alternatively, receiving one or more perception metrics includes receiving the one or more perception metrics from one of a network device, an administration module and/or a non-transitory memory location. In another example, as represented by block 5-4b, determining a number of network performance characterization values {*NPC*(*ti, cᵢ, xᵢ*)} includes generating one or more perception metrics {*pᵢ*} by monitoring network traffic. For example, in some implementations, an analytics module or the like inspects packets to and/or from the identified client devices {*cᵢ*} in order to generate one or more perception metrics {*pᵢ*}. As represented by block 5-4c, determining a number of network performance characterization values {*NPC*(*tᵢ*, *cᵢ*, *xᵢ*)} includes aggregating two or more perception metrics {*pᵢ*} in order to produce a corresponding network performance characterization value *NPC*(*tᵢ*, *cᵢ*, *xᵢ*)*.* In some implementations, as an example, with reference to Figure 1B, the corresponding NPC values are NPC₁, NPC₂, NPC₃, NPC₄, NPC₅ requested and received from the five client devices 191, 192, 193a/b, 194 and 195. Additionally and/or alternatively, with further reference to Figure 1B, the corresponding NPC values NPC₁, NPC₂, NPC₃, NPC₄, NPC₅ are determined by the NPC module 1041 using corresponding sets of perception metrics {*p₁*}*,* {*p₂*}*,* {*p₃*}, {*p4*}, {*p₅*} that are requested and received from the five client devices 191, 192, 193a/b, 194 and 195. A more detailed example of determining network performance characterization values is described below with reference to Figure 6.

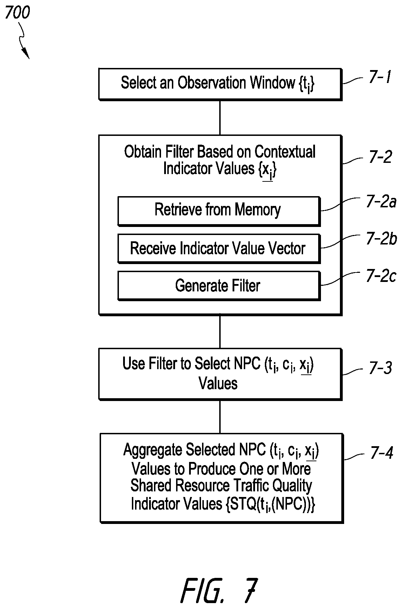

As represented by block 5-5, the method 500 includes generating one or more shared-resource traffic quality indicator values *{STQ*(*tᵢ, NPC*)} based on at least some of the network performance characterization values {*NPC(tᵢ*, *cᵢ*, *xᵢ*)}. Each shared-resource traffic quality indicator value characterizes a portion of a network by assessing network performance characterization values in relation to capacity values of one or more shared network resources (e.g., bandwidth, processor time, memory, etc.). Accordingly, as represented by block 5-5a, the method 500 includes selecting at least some of the network performance characterization values {*NPC*(*tᵢ, cᵢ*, *xᵢ*)}. That is, in some implementations generating the one or more shared-resource traffic quality indicator values includes using one or more contextual indicator values in order to select network performance characterization values. As represented by block 5-5b, the method 500 includes assessing the selected network performance characterization values with respect to capacity values of one or more shared network resources in order to generate the one or more shared-resource traffic quality indicator values, {*STQ*(*ₜᵢ, NPC*)}*.* For example, with reference to Figure 1B, the STQ module 1047 is configured to determine at least one STQ value from the NPC values NPC₁, NPC₂, NPC₃, NPC₄, NPC₅, provided by the NPC module 1041. A more detailed example of generating shared-resource traffic quality indicator values is described below with reference to Figure 7.

Figure 6 is a flowchart representation of a method 600 of determining network performance characterization values {*NPC(tᵢ, cᵢ*, *xᵢ*)} according to some implementations. In some implementations, the method 600 is performed by an analytics module as described above with reference to Figure 5. Briefly, the method 600 includes generating a corresponding network performance characterization value *NPC*(*tᵢ, cᵢ*, *xᵢ*)} for a client device *cᵢ* using one or more perception metrics {*pᵢ*} characterizing factors that impact the quality of experience associated with the use of media content data on the client device *cᵢ*. To that end, as represented by block 6-1, the method 600 includes selecting an observation window *tᵢ* during which network performance characterization values {*NPC*{*tᵢ, cᵢ*, *xᵢ*)} are determined. As represented by block 6-2, the method 600 includes selecting at least a portion of a network. As represented by block 6-3, the method 600 includes selecting one or more client devices {*cᵢ*} that share a resource on the selected portion of the network based on one or more contextual indicator values *xᵢ* - as described above with reference to Figure 5. As represented by block 6-4, the method 600 includes performing deep packet inspection of data packets sent to and/or from the selected client devices {*cᵢ*} in order to determine bandwidth utilization values associated with the client devices. Additionally and/or alternatively, the method 600 also includes requesting from client devices data associated with perceptual quality, such as for example, information about device capabilities, user playback preferences, playout buffer level indicators, etc.

As represented by block 6-5, the method 600 includes generating one or more perception metrics {*pᵢ*} for each client device from data gathered by deep packet inspection and/or from communication with the client devices. For example, in some implementations, a perception metric includes a relative performance indicator associated with a performance criterion. Performance criteria include, without limitation, playback preference level, playback capability, degradation tolerance, one or more degradation policies, buffer level criteria, and a bandwidth utilization criteria. In other words, a perception metric, associated with a respective client device, is also associated with at least one of playback preference level, playback capability, degradation tolerance, one or more degradation policies, a buffer level criterion, and a bandwidth utilization criterion associated with the respective client device. As an example, as represented by block 6-5a, generating a perception metric *pᵢ* includes calculating a playback preference level indicator value. The playback preference level indicator value characterizes how closely a client device is able achieve a predetermined playback preference level based on current network conditions (e.g., resource allocations). In some implementations, the playback preference level indicator value is produced by a function of the ratio between a predetermined playback preference level for a client device and the actual playback level achieved by the client device based on the network conditions when the determination is made. In some implementations, as represented by block 6-5b, generating a perception metric *pᵢ* includes calculating a playback capability indicator value. The playback capability indicator value characterizes utilization of the playback capabilities of a client device based on current network conditions. In some implementations, the playback capability indicator value is produced by a function of the utilization of the playback capability of the device based on the network conditions when the determination is made. For example, based on the network conditions, a client device may be restricted to playing back a video stream at 720p even though the client device is capable of playing back a video stream at 1080p. In some implementations, as represented by block 6-5c, generating a perception metric *pᵢ* includes calculating a degradation tolerance indicator value, which characterizes the degradation of media content data as experienced at a client device. In some implementations, the degradation tolerance indicator value is produced by a function of the ratio between a predetermined degradation tolerance level and the actual degradation experienced at the client device. Similarly, in some implementations, as represented by block 6-5d, generating a perception metric *pᵢ* includes calculating one or more degradation indicator values based on one or more degradation policies associated with a subscription tier model. Degradation polices define how perceptual quality of media content data playback is permitted to degrade for a client device in a particular subscription tier under various network conditions. In some implementations, as represented by block 6-5e, generating a perception metric *pᵢ* includes obtaining a buffer level indicator value. The buffer level indicator value characterizes the utilization of a playout buffer in a client device. In some implementations, the buffer level indicator value provides an indication of the unavailable capacity or available capacity of the playout buffer. In some implementations, the buffer level indicator value approximates the time remaining before the playout buffer is empty. In some implementations, the buffer level indicator value provides at least one of an underflow indicator and overflow indicator. In some implementations, as represented by block 6-5f, generating a perception metric *pᵢ* includes calculating a bandwidth utilization indicator value, which characterizes how much of the bandwidth a client device is using relative to a corresponding bandwidth allocation provided in accordance with a subscription tier.

As represented by block 6-6, the method 600 includes aggregating one or more perception metrics {*pᵢ*} in order to produce a network performance characterization value *NPC*(*tᵢ*, *cᵢ*, *xᵢ*)} for a client device. For example, as represented by block 6-6a, in some implementations, aggregating includes generating a weighted combination (e.g., weighted sum, weighted average, etc.) of one or more perception metrics {*pᵢ*} associated with the client device. In another example, as represented by block 6-6b, in some implementations, aggregating includes generating a normalized combination (e.g., normalized sum, normalized average, etc.) of one or more perception metrics {*pᵢ*} associated with the client device.

Figure 7 is a flowchart representation of a method 700 of generating one or more shared-resource traffic quality indicator values according to some implementations. In some implementations, the method 700 is performed by an analytics module as described above with reference to Figure 5. Briefly, the method 700 includes generating one or more shared-resource traffic quality indicator values {*STQ*(*tᵢ*, *NPC*)} using a function of an aggregation of network performance characterization values *NPC*(*tᵢ*, *cᵢ*, *xᵢ*) and capacity values of one or more shared resources (e.g., bandwidth, processor time, memory, etc.). To that end, as represented by block 7-1, the method 700 includes selecting an observation window *tᵢ*. As represented by block 7-2, the method 700 includes obtaining a filter based on contextual indicator values *xᵢ*. In other words, one or more contextual indicator values *xᵢ* are used to create a selection filter, which is used to select one or more network performance characterization values *NPC*(*tᵢ*, *cᵢ*, *xᵢ*) associated with a shared resource. For example, as represented by block 7-2a, the method 700 includes retrieving contextual indicator values *xᵢ* from a non-transitory memory or computer readable medium. In some implementations, as represented by block 7-2b, the method 700 includes receiving contextual indicator values *xᵢ* from a module, system, or device. As represented by block 7-2c, the method 700 includes generating the selection filter from the contextual indicator values *xᵢ*. As represented by block 7-3, the method 700 includes using the selection filter to obtain network performance characterization values *NPC*(*tᵢ, cᵢ*, *xᵢ*). In some implementations, obtaining the network performance characterization values *NPC*(*tᵢ*, *cᵢ*, *xᵢ*) includes one of reading the values from a non-transitory memory or the like, receiving the values from module, system or device, and instructing one of a module, system or device to generate the values in response to a request.

As represented by block 7-4, the method 700 includes aggregating the selected network performance characterization values *NPC*(*tᵢ*, *cᵢ*, *xᵢ*)} in order to produce one or more shared-resource traffic quality indicator values {*STQ*(*tᵢ*, *NPC*)}. For example, as represented by block, 7-4a, in some implementations, aggregating includes generating a weighted combination (e.g., weighted sum, weighted average, etc.) of the selected network performance characterization values *NPC*(*tᵢ*, *cᵢ*, *xᵢ*). In another example, as represented by block 7-4b, in some implementations, aggregating includes generating a normalized combination (e.g., normalized sum, normalized average, etc.) of the selected network performance characterization values *NPC(tᵢ, cᵢ*, *xᵢ*).

Figure 8 is a flowchart representation of a method 800 of admission control utilizing contextual quality indicators in accordance with some implementations. In some implementations, the method 800 is performed by a resource management module associated with a network administration node or module (e.g., network administration node 142) and/or a resource bottleneck node (e.g., headend node 150, gateway 182, etc.). Briefly, the method 800 includes determining whether or not to grant an additional client device access to a shared network resource (e.g., bandwidth, processor time, memory, etc.) by evaluating the potential perceptual quality degradation that would be experienced by client devices that are currently using the shared network resource.

To that end, as represented by block 8-1, the method 800 includes selecting a shared network resource to evaluate. As represented by block 8-2, the method 800 includes identifying one or more client devices {*cᵢ*} that are currently utilizing the shared network resource. As represented by block 8-3, the method 800 includes generating a time distribution of network performance characterization values {*NPC*(*tᵢ, cᵢ*, *xᵢ*)} for the identified client devices {*cᵢ*}. In some implementations, the time distribution includes one or more statistics that characterize joint utilization of the shared network resource that are representative of predictive indicators. As represented by block 8-4, the method 800 includes obtaining subscriber policy limits or the like for the identified client devices {*cᵢ*}. In some implementations, subscriber policy limits include the various levels of service that define a subscription tier model. For example, service levels define priority tiers, data throughput ranges, data throughput floors and/or ceilings, and degradation policies associated with the subscription tier model. As represented by block 8-5, the method 800 includes generating a time distribution of one or more shared-resource traffic quality indicator values {*STQ*(*tᵢ*, *NPC*)} associated with the identified client devices (e.g., as described above with reference to Figure 7), where each generated time distribution is representative of a predictive indicator.

As represented by block 8-6, the method 800 includes generating a degradation value using the subscriber policy limits and the previously generated time distributions. For example, in some implementations, a degradation value provides a criterion that defines an acceptable or unacceptable amount of degradation for the identified client devices {*cᵢ*} that are currently using the shared network resource. In another example, a degradation value defines a range of allowable degradation for one or more of the identified client devices {*cᵢ*} currently sharing the shared network resource. As represented by block 8-7, the method 800 includes modeling the addition of a new client device. That is, the method includes determining the impact on the identified client devices {*cᵢ*} of allowing a new client device to use a portion of the shared network resource. In some implementations, modeling includes determining the impact for a number of use cases in which the new client device is provided various allocation levels associated with various perceptual quality levels. Subsequently, as represented by block 8-9, the method 800 includes determining whether or not the identified client devices can tolerate the degradation caused by potentially allocating a portion of the shared network resource to the new client device. If the degradation value does not breach a criterion ("No" path from block 8-8), as represented by block 8-9, the method 800 includes allocating a portion of the shared network resource to the new client device (i.e., permitting admission). On the other hand, if the degradation value breaches a criterion ("Yes" path from block 8-8), the method 800 includes denying admission to the new client device so that the identified client devices {*cᵢ*} are not adversely impacted.

Figure 9 is a flowchart representation of a method of network management utilizing contextual quality indicators in accordance with some implementations. In some implementations, the method 900 is performed by a resource management module associated with a network administration node (e.g., network administration node 142) and/or a resource bottleneck node (e.g., headend node 150, gateway 182, etc.). Briefly, the method 900 includes determining whether or not to reduce the number of client devices using a shared network resource by evaluating perceptual quality performance experienced by the client devices that are currently using the shared network resource.

To that end, as represented by block 9-1, the method 900 includes selecting a shared network resource to evaluate. As represented by block 9-2, the method 900 includes identifying one or more client devices {*cᵢ*} that are currently jointly using the shared network resource. As represented by block 9-3, the method 900 includes obtaining subscriber policy limits or the like for the identified client devices {*cᵢ*}. As represented by block 9-4, the method 900 includes identifies one or more priority tiers associated with the identified client devices {*cᵢ*}. In some implementations, the one or more priority tiers define which client devices and/or groups of client devices are superior and/or inferior to other client devices within a subscription tier model. In some implementations, the one or more priority tiers define relative performance degradation policies between client devices in the same or different tiers.

As represented by block 9-5, the method 900 includes obtaining one or more network performance characterization values {*NPC*(*tᵢ*, *cᵢ*, *xᵢ*)} for at least one identified priority tier. Additionally and/or alternatively, the method includes obtaining one or more shared-resource traffic quality indicator values {*STQ*(*tᵢ, NPC*)} associated with the identified client devices. As represented by block 9-6, the method 900 includes determining whether or not one of the network performance characterization values {*NPC*(*tᵢ*, *cᵢ*, *xᵢ*)} fails to satisfy a performance criterion. Additionally and/or alternatively, in some implementations, the method includes similarly evaluating one or more shared-resource traffic quality indicator values {*STQ*(*tᵢ, NPC*)} associated with the identified client devices.

If the network performance characterization values satisfy the performance criterion ("No" path from block 9-6), as represented by block 9-7, the method 900 includes permitting the identified client devices {*cᵢ*} continued access to the shared network resource. On the other hand, if one of the network performance characterization values {*NPC*(*tᵢ*, *cᵢ*, *xᵢ*)} fails to satisfy the performance criterion ("Yes" path from block 9-6), as represented by block 9-8, the method 900 includes disallowing or removing at least one of the identified client devices from continuing to use the shared network resource. In some implementations, the at least one client device that is subsequently denied service has the lowest relative priority as defined by the one or more priority tiers. In some implementations, the at least one client device that is subsequently denied service is selected on the basis of previous service ejections, so that client devices in the same priority tier are treated in manner that ensures a close association of performance penalties.

Figure 10 is a block diagram of an example of a network resource management system 1000 in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the network resource management system 1000 includes one or more processing units (CPU's) 1002, a network interface 1003, a memory 1010, a local I/O interface 1005, and one or more communication buses 1004 for interconnecting these and various other components.

In some implementations, the communication buses 1009 include circuitry that interconnects and controls communications between system components. The memory 1010 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. The memory 1010 optionally includes one or more storage devices remotely located from the CPU(s) 1002. The memory 1010 comprises a non-transitory computer readable storage medium. Moreover, in some implementations, the memory 1010 or the non-transitory computer readable storage medium of the memory 1010 stores the following programs, modules and data structures, or a subset thereof including an optional operating system 1011, network resource data 1020, subscriber/user profile data 1030, an analytics module 1040, a resource management module 1050, and contextual data values 1060.

The operating system 1011 includes procedures for handling various basic system services and for performing hardware dependent tasks.

In some implementations, the network resource data 1020 includes data associated with one or more shared network resources (e.g., bandwidth, processor time, memory, etc.). For example, as shown in Figure 10, in some implementations, the network resource data 1020 includes link capacity data 1021, processor capacity data 1022, and memory capacity data 1023. In some implementations, the subscriber/user profile data 1030 includes data associated with one or more subscribers and/or subscriber client devices 1031-a, 1031b,..., 1031-n. For example, as shown in Figure 10, in some implementations, the subscriber/user profile data 1030 includes subscriber policy limits or the like for various client devices. In some implementations, subscriber policy limits include the various levels of service that define a subscription tier model. For example, service levels define priority tiers, data throughput ranges, data throughput floors or ceilings, and degradation policies associated with the subscription tier model. In some implementations, the contextual data values 1060 include geographic data (e.g., service-area groupings, distribution of infrastructure assets, etc.), content-type data (e.g., TV show identifiers, etc.) and subscriber data (e.g., income levels, usage data, etc.).

In some implementations, the analytics module 1040 is configured to generate contextual quality of experience metrics, such as network performance characterization values {*NPC*(*tᵢ, cᵢ*, *xᵢ*)} and shared-resource traffic quality indicator values {*STQ*(*tᵢ*, *NPC*)}. As shown in Figure 10, the analytics module 1040 includes a network performance characterization (NPC) module 1041 and a shared-resource traffic quality indicator (STQ) module 1046.

The NPC module 1041 is configured to determine network performance characterization values {N*PC*(*tᵢ, cᵢ*, *xᵢ*)} for client devices {*cᵢ*} using one or more perception metrics {*pᵢ*} characterizing factors that impact the quality of experience associated with the use of media content data on each client device *cᵢ*. To that end, the NPC module 1041 includes a packet analysis module 1042, a perception metric module 1043, and an aggregation module 1045. In some implementations, the packet analysis module 1042 is configured to at least one of monitor network traffic to and/or from client devices {*cᵢ*} in order to generate perception metrics {*pᵢ*}, and request and receive at least one perception metric *pᵢ* from at least some of the identified client devices {*cᵢ*}. To that end, the packet analysis module 1042 include instructions 1042a. In some implementations, perception metric module 1043 is used to generate and/or store one or more perception metrics {*pᵢ*} for each of one or more client devices. For example, as shown in Figure 10, the perception metric module 1043 include N perception metrics 1043-1a, 1043-1b, ..., 1043-1n for a client device *cᵢ*. In some implementations, as described above with reference to Figure 6, the aggregation module 1045 is configured to combine one or more perception metrics {*pᵢ*} in order to produce a corresponding network performance characterization value *NPC*(*tᵢ*, *cᵢ*, *xᵢ*)}. To that end, the aggregation module 1045 includes instructions 1045-a and heuristics and metadata 1045-b.

The STQ module 1046 is configured to generate shared-resource traffic quality indicator values {*STQ*(*tᵢ*, *NPC*)} using a function of an aggregation of network performance characterization values *NPC*(*tᵢ*, *cᵢ*, *xᵢ*) and capacity values of one or more shared resources (e.g., bandwidth, processor time, memory, etc.). To that end, the STQ module 1046 includes a filter module 1047, an aggregation module 1048, and an assessment module 1049. The filter module 1047 is configured to use one or more contextual indicator values *xᵢ* in order to create a selection filter, and subsequently select one or more network performance characterization values {*NPC*(*tᵢ*, *cᵢ*, *xᵢ*)} associated with a shared resource. To that end, the filter module 1047 includes instructions 1047a and heuristics and metadata 1047b. The aggregation module 1048 is configured to generate a weighted combination (e.g., weighted sum, weighted average, etc.) of the selected network performance characterization values {*NPC*(*tᵢ*, *cᵢ*, *xᵢ*)}. To that end, the aggregation module 1048 includes instructions 1048a and heuristics and metadata 1048b. The assessment module 1049 is configured to assess aggregated network performance characterization values {*NPC*(*tᵢ*, *cᵢ*, *xᵢ*)} in relation to one or more capacity values of one or more shared network resources (e.g., bandwidth, processor time, memory, etc.) in order to produce shared-resource traffic quality indicator values {*STQ*(*ₜᵢ, NPC*)}*.* To that end, the assessment module 1049 includes instructions 1049a and heuristics and metadata 1049b.

In some implementations, the resource management module 1050 is configured to determine whether a portion of a network, such as a shared network resource, has capacity to deliver data-intensive traffic at various perceptual quality levels (i.e., quality-based network capacity). In some implementations, the resource management module 1050 is configured to use one or more shared-resource traffic quality indicator values in order to determine quality-based network capacity. Accordingly, the resource management module 1050 includes various heuristics and metadata 1053. In some implementations, the resource management module 1050 is configured to determine whether or not to grant an additional client device access to a shared network resource (e.g., bandwidth, processor time, memory, etc.) by evaluating the potential perceptual quality degradation that would be experienced by client devices that are currently using the shared network resource. To that end, the resource management module 1050 includes admission instructions 1051 that are executable by the CPU(s) 1002. In some implementations, the resource management module 1050 is configured to determine whether or not to reduce the number of client devices using a shared network resource by evaluating perceptual quality performance experienced by the client devices that are currently using the shared network resource. To that end, the resource management module 1050 includes de-admission instructions 1052 that are executable by the CPU(s) 1002.

In some implementations, a device and/or a circuit having one or more features described herein can be included in any number of communication devices. Such a device and/or a circuit can be implemented directly in the communication device, in a modular form as described herein, or in some combination thereof. In some embodiments, such a communication device can include, for example, a cellular phone, a smart-phone, a hand-held wireless device with or without phone functionality, a tablet, a router, a switch, an access point, a base station, a server, etc. That is, those skilled in the art will also appreciate from the present disclosure that in various implementations the network resource management system 1000 is included in various devices, such as a computer, a laptop computer, a tablet device, a netbook, an internet kiosk, a personal digital assistant, an optical modem, a base station, a repeater, a wireless router, a mobile phone, a smartphone, a gaming device, a computer server, or any other computing device. In various implementations, such devices include one or more processors, one or more types of memory, a display and/or other user interface components such as a keyboard, a touch screen display, a mouse, a track-pad, a digital camera and/or any number of supplemental devices to add functionality.

It will also be understood that, although the terms "first," "second," etc. may be used herein to describe various elements, these elements should not be limited by these terms. These terms are only used to distinguish one element from another. For example, a first contact could be termed a second contact, and, similarly, a second contact could be termed a first contact, which changing the meaning of the description, so long as all occurrences of the "first contact" are renamed consistently and all occurrences of the second contact are renamed consistently. The first contact and the second contact are both contacts, but they are not the same contact.

The terminology used herein is for the purpose of describing particular embodiments only and is not intended to be limiting of the claims. As used in the description of the embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method (500, 600, 700, 800, 900) comprising:
determining a plurality of network performance characterization values associated with a respective plurality of client devices (191, 192, 193a, 193b, 194, 195, 196, 197, 300, 1031),
wherein each network performance characterization value provides a corresponding quantitative characterization of factors that influence quality of experience associated with the use of media content data (114) that is received by a respective one of the plurality of client devices, and
wherein each network performance characterization value is based on at least one perception metric which is generated for the received media content data as a function of a predetermined performance level and an actual performance level achieved at the respective client device;
generating one or more shared-resource traffic quality indicator values associated with one or more of the plurality of client devices (191, 192, 193a, 193b, 194, 195, 196, 197, 300, 1031), wherein each shared-resource traffic quality indicator value characterizes a portion of a network (120, 140) based on an assessment of the plurality of network performance characterization values in relation to one or more capacity values of one or more respective shared network resources; and
managing an allocation of shared network resources based on the one or more shared-resource traffic quality indicator values.

2. The method (500, 600, 700, 800, 900) of claim 1, wherein the factors that characterize quality of experience include at least one of a peak-signal-to-noise ratio, a mean opinion score, a video quality metric of the received media content data (114), an encoding rate, and subscription tier data or wherein the factors that characterize quality of experience include an indicator of the continuity with which the media content data is used by a respective client device associated with a particular subscription tier.

3. The method (500, 600, 700, 800, 900) of claim 1, further comprising selecting an observation window during which to determine the plurality of network performance characterization values and generate the one or more shared-resource traffic quality indicator values or wherein the at least one perception metric which is generated for the received media content data (114) as a function of the predetermined performance level and the actual performance level comprises one of:
a playback preference level indicator value which is generated as a function of a predetermined playback preference level and an actual playback level;
a playback capability indicator value which is generated as a function of predetermined playback capability and an actual playback capability;
a degradation tolerance indicator value which is generated as a function of a predetermined degradation tolerance level and an actual degradation level; or
a buffer level indicator value which is generated as a function of a predetermined buffer capacity and an actual utilized buffer capacity.

4. The method (500, 600, 700, 800, 900) of claim 1, further comprising selecting a portion of the network within which to determine the plurality of network performance characterization values and generate the one or more shared-resource traffic quality indicator values, wherein the plurality of client devices share one or more of the shared network resources on the selected portion of the network, optionally further comprising one of selecting and identifying the plurality of client devices (191, 192, 193a, 193b, 194, 195, 196, 197, 300, 1031) using one or more contextual indicator values, wherein the contextual indicator values include at least one of geographic data, content-type data, and subscriber data that associated with the plurality of client devices, or further comprising determining, based on the one or more shared-resource traffic quality indicator values, whether or not the portion of the network has the capacity to deliver the media content data at acceptable perceptual quality levels at the client devices; and wherein the managing further comprises managing the allocation of shared network resources based on the determination, optionally wherein managing the allocation further comprises granting or denying a new client device access to the shared network resources based on the determination.

5. The method (500, 600, 700, 800, 900) of claim 1, wherein determining the plurality of network performance characterization values includes at least one of:
receiving one or more perception metrics associated with at least some of the plurality of client devices; and
generating one or more perception metrics by monitoring network traffic associated with at least some of the plurality of client devices,
wherein each perception metric quantitatively characterizes a factor that influences the quality of experience associated with the use of media content data (114) by a respective client device.

6. The method (500, 600, 700, 800, 900) of claim 5, wherein determining the plurality of network performance characterization values includes aggregating two or more perception metrics associated with one of the plurality of client devices (191, 192, 193a, 193b, 194, 195, 196, 197, 300, 1031) in order to produce a respective one of the plurality of network performance characterization values.

7. The method (500, 600, 700, 800, 900) of claim 5, wherein receiving the one or more perception metrics includes receiving the one or more perception metrics from at least one of a network device, an administration module and a non-transitory memory location.

8. The method of claim 5, wherein monitoring network traffic includes performing deep packet inspection on packets destined to or sent from one or more of the plurality of client devices (191, 192, 193a, 193b, 194, 195, 196, 197, 300, 1031) in order to generate one or more perception metrics.

9. The method (500, 600, 700, 800, 900) of claim 5, wherein a respective one of the one or more perception metrics, associated with a respective client device, characterizes at least one of playback preference level, playback capability, degradation tolerance, one or more degradation policies, a buffer level criterion, and a bandwidth utilization criterion associated with the respective client device.

10. The method (500, 600, 700, 800, 900) of claim 5, wherein at least one of the one or more perception metrics includes a relative performance indicator associated with a performance criterion.

11. The method (500, 600, 700, 800, 900) of claim 1, wherein generating the one or more shared-resource traffic quality indicator values includes using one or more contextual indicator by at least one of:
obtaining the one or more contextual indicator values;
generating a selection filter from the one or more contextual indicator values; and
using the selection filter in order to select network performance characterization values, optionally further comprising aggregating the selected network performance characterization values in order to produce the one or more shared-resource traffic quality indicator values, optionally wherein aggregating includes one of generating a weighted combination of the two or more perception metrics and generating a normalized combination of the two or more perception metrics.

12. The method (500, 600, 700, 800, 900) of claim 1, further comprising:
obtaining subscriber policy limits associated with the plurality of client devices (191, 192, 193a, 193b, 194, 195, 196, 197, 300, 1031), wherein the plurality of client devices share a shared network resource; and
determining whether or not to change the number of client devices sharing the shared network resource based on an assessment of a combination of the subscriber policy limits and at least one of the network performance characterization values and the shared-resource traffic quality indicator values associated with the plurality of client devices.

13. The method (500, 600, 700, 800, 900) of claim 12, further comprising:
generating time distributions of at least one of the network performance characterization values and the shared-resource traffic quality indicator values associated with the plurality of client devices (191, 192, 193a, 193b, 194, 195, 196, 197, 300, 1031), wherein each generated time distribution is representative of a predictive indicator;
generating a shared network resource degradation value using the time distributions; and
determining whether or not to permit an additional client device shared access to the shared network resource by evaluating the potential performance degradation caused by the additional client device to the plurality of client devices using the shared network resource degradation value, or the method of claim 12, further comprising:
identifying one or more priority tiers within the plurality of client devices using the subscriber policy limits, wherein the one or more priority tiers define which client devices are superior or inferior to other client devices within a subscription tier model;
selecting one or more network performance characterization values for client devices within at least one priority tier; and
determining whether or not to cease access to the shared network resource for one of the plurality of client devices based on an evaluation of the selected one or more network performance characterization values.

14. An apparatus comprising:
logic configured to perform a method (500, 600, 700, 800, 900) according to any preceding claim.

15. A computer program product including instructions that when executed by a processor (115, 135, 316) cause a device to operate to perform a method (500, 600, 700, 800, 900) according to any of claims 1 to 13.

## Patentansprüche

1. Verfahren (500, 600, 700, 800, 900), das Folgendes umfasst:
Bestimmen einer Vielzahl von Netzwerkleistungskennwerten, die einer jeweiligen Vielzahl von Clientvorrichtungen (191, 192, 193a, 193b, 194, 195, 196, 197, 300, 1031) zugeordnet sind,
wobei der jeder Netzwerkleistungskennwert eine entsprechende quantitative Charakterisierung von Faktoren liefert, die die Qualität der Erfahrung beeinflussen, die mit der Verwendung von Medieninhaltsdaten (114) verbunden ist, die von einer jeweiligen der Vielzahl von Clientvorrichtungen empfangen werden, und
wobei jeder Netzwerkleistungskennwert auf mindestens einer Wahrnehmungsmetrik basiert, die für die empfangenen Medieninhaltsdaten in Abhängigkeit von einem vorbestimmten Leistungsniveau und einem tatsächlichen Leistungsniveau erzeugt wird, das auf der jeweiligen Clientvorrichtung erreicht wird;
Erzeugen eines oder mehrerer Datenverkehrsqualitätsindikatorwerte mit gemeinsam genutzter Ressource, die einer oder mehreren der Vielzahl von Clientvorrichtungen (191, 192, 193a, 193b, 194, 195, 196, 197, 300, 1031) zugeordnet sind, wobei jeder Datenverkehrsqualitätsindikatorwert mit gemeinsam genutzter Ressource einen Teil eines Netzwerks (120, 140) kennzeichnet basierend auf einer Bewertung der Vielzahl von Netzwerkleistungskennwerten in Bezug auf einen oder mehrere Kapazitätswerte von einer oder mehreren jeweiligen gemeinsam genutzten Netzwerkressourcen; und
Verwalten einer Zuordnung von gemeinsam genutzten Netzwerkressourcen basierend auf einem oder mehreren Datenverkehrsqualitätsindikatorwerten mit gemeinsam genutzter Ressource.

2. Verfahren (500, 600, 700, 800, 900) nach Anspruch 1, wobei die Faktoren, die die Qualität der Erfahrung kennzeichnen, mindestens eines von Folgendem umfassen: ein Spitzensignal- /Rausch-Verhältnis, eine mittlere Meinungsbewertung, eine Videoqualitätsmetrik der empfangenen Medieninhaltsdaten (114), eine Codierungsrate und Abonnementschichtdaten oder wobei die Faktoren, die die Qualität der Erfahrung kennzeichnen, einen Kontinuitätsindikator umfassen, mit dem die Medieninhaltsdaten von einer jeweiligen Clientvorrichtung verwendet werden, die einer bestimmten Abonnementschicht zugeordnet ist.

3. Verfahren (500, 600, 700, 800, 900) nach Anspruch 1, das ferner das Auswählen eines Beobachtungsfensters umfasst, während dem die Vielzahl von Netzwerkleistungskennwerten bestimmt wird und der eine oder die mehreren Datenverkehrsqualitätsindikatorwerte mit gemeinsam genutzter Ressource erzeugt werden oder wobei die mindestens eine Wahrnehmungsmetrik, die für die empfangenen Medieninhaltsdaten (114) in Abhängigkeit von dem vorbestimmten Leistungsniveau und dem tatsächlichen Leistungsniveau erzeugt wird, eines von Folgendem umfasst:
einen Wiedergabevorzugspegelindikatorwert, der als eine Funktion eines vorbestimmten Wiedergabevorzugspegels und eines tatsächlichen Wiedergabepegels erzeugt wird;
einen Wiedergabefähigkeitsindikatorwert, der als Funktion einer vorbestimmten Wiedergabefähigkeit und einer tatsächlichen Wiedergabefähigkeit erzeugt wird;
einen Verschlechterungstoleranzindikatorwert, der als eine Funktion eines vorbestimmten Verschlechterungstoleranzniveaus und eines tatsächlichen Verschlechterungsniveaus erzeugt wird; oder
einen Pufferpegelindikatorwert, der in Abhängigkeit von einer vorbestimmten Pufferkapazität und einer tatsächlich verwendeten Pufferkapazität erzeugt wird.

4. Verfahren (500, 600, 700, 800, 900) nach Anspruch 1, das ferner das Auswählen eines Teils des Netzwerks umfasst, in dem die Vielzahl von Netzwerkleistungskennwerten bestimmt wird und der eine oder die mehreren Datenverkehrsqualitätsindikatorwerte mit gemeinsam genutzter Ressource erzeugt werden, wobei die Vielzahl von Clientvorrichtungen eine oder mehrere der gemeinsam genutzten Netzwerkressourcen in dem ausgewählten Teil des Netzwerks gemeinsam nutzt, wobei das Verfahren ferner optional Folgendes umfasst: Auswählen und Identifizieren der Vielzahl von Clientvorrichtungen (191, 192, 193a, 193b, 194, 195, 196, 197, 300, 1031) unter Verwendung eines oder mehrerer Kontextindikatorwerte, wobei die Kontextindikatorwerte mindestens eines von geographischen Daten, Inhaltstypdaten und Teilnehmerdaten umfassen, die der Vielzahl von Clientvorrichtungen zugeordnet sind, und/oder ferner Bestimmen, basierend auf dem einen oder den mehreren Datenverkehrsqualitätsindikatorenwerten der gemeinsam genutzten Ressource, ob der Teil des Netzwerks die Kapazität hat, den Medieninhalt mit akzeptabler Wahrnehmungsqualität auf den Clientvorrichtungen zu liefern; und wobei die Verwaltung ferner die Verwaltung der Zuweisung von freigegebenen Netzwerkressourcen basierend auf der Bestimmung umfasst, optional wobei die Verwaltung der Zuweisung ferner das Erteilen oder Verweigern eines neuen Clientvorrichtungszugriffs auf die gemeinsam genutzten Netzwerkressourcen basierend auf der Bestimmung umfasst.

5. Verfahren (500, 600, 700, 800, 900) nach Anspruch 1, wobei das Bestimmen der Vielzahl von Netzwerkleistungskennwerten mindestens eines von Folgendem umfasst:
Empfangen einer oder mehrerer Wahrnehmungsmetriken, die mindestens einigen der mehreren Clientvorrichtungen zugeordnet sind; und
Erzeugen einer oder mehrerer Wahrnehmungsmetriken durch Überwachen des Netzwerkdatenverkehrs, der mindestens einigen der mehreren Clientvorrichtungen zugeordnet ist,
wobei jede der Wahrnehmungsmetriken quantitativ einen Faktor kennzeichnet, der die Qualität der Erfahrung beeinflusst, die der Verwendung von Medieninhaltsdaten (114) durch eine jeweiliges Clientvorrichtung zugeordnet ist.

6. Verfahren (500, 600, 700, 800, 900) nach Anspruch 5, wobei das Bestimmen der Vielzahl von Netzwerkleistungskennwerten das Aggregieren von zwei oder mehr Wahrnehmungsmetriken umfasst, die einer der Vielzahl von Clientvorrichtungen (191, 192, 193a, 193b, 194, 195, 196, 197, 300, 1031) zugeordnet sind, um einen jeweiligen der Vielzahl von Netzwerkleistungskennwerten zu erzeugen.

7. Verfahren (500, 600, 700, 800, 900) nach Anspruch 5, wobei das Empfangen der einen oder mehreren Wahrnehmungsmetriken das Empfangen der einen oder mehreren Wahrnehmungsmetriken von einer Netzwerkvorrichtung, einem Verwaltungsmodul und/oder einem nicht-flüchtigen Speicherort umfasst.

8. Verfahren nach Anspruch 5, wobei das Überwachen des Netzwerkverkehrs das Durchführen einer tiefen Paketinspektion an Paketen umfasst, die für eine oder mehrere der Vielzahl von Clientvorrichtungen (191, 192, 193a, 193b, 194, 195, 196, 197, 300, 1031) bestimmt sind oder von diesen gesendet werden, um eine oder mehrere Wahrnehmungsmetriken zu erzeugen.

9. Verfahren (500, 600, 700, 800, 900) nach Anspruch 5, wobei eine jeweilige der einen oder mehreren Wahrnehmungsmetriken, die einer jeweiligen Clientvorrichtung zugeordnet sind, mindestens eine der folgenden Eigenschaften auszeichnet: Wiedergabevorrangsstufe, Wiedergabefähigkeit, Toleranzverschlechterung, eine oder mehrere Abbaurichtlinien, ein Pufferpegelkriterium und ein Bandbreitennutzungskriterium, die der jeweiligen Clientvorrichtung zugeordnet sind.

10. Verfahren (500, 600, 700, 800, 900) nach Anspruch 5, wobei mindestens eine der mindestens einen Wahrnehmungsmetriken einen relativen Leistungsindikator umfasst, der einem Leistungskriterium zugeordnet ist.

11. Verfahren (500, 600, 700, 800, 900) nach Anspruch 1, wobei das Erzeugen des einen oder der mehreren Datenverkehrsqualitätsindikatorwerte mit gemeinsam genutzter Ressource das Verwenden eines oder mehrerer Kontextindikatoren durch mindestens eines der Folgenden umfasst:
Erhalten des einen oder der mehreren Kontextindikatorwerte;
Erzeugen eines Auswahlfilters aus dem einen oder den mehreren Kontextindikatorwerten; und
Verwenden des Auswahlfilters zum Auswählen von Netzwerkleistungskennwerten, optional ferner umfassend das Aggregieren der ausgewählten Netzwerkleistungskennwerte, um optional einen oder mehrere Datenverkehrsqualitätsindikatorwerte mit gemeinsam genutzter Ressource zu erzeugen, wobei das Aggregieren optional das Erzeugen einer gewichteten Kombination der zwei oder mehr Wahrnehmungsmetriken und das Erzeugen einer normalisierten Kombination der zwei oder mehr Wahrnehmungsmetriken umfasst.

12. Verfahren (500, 600, 700, 800, 900) nach Anspruch 1, das ferner Folgendes umfasst:
Erhalten von Teilnehmerrichtliniengrenzwerten, die der Vielzahl von Clientvorrichtungen (191, 192, 193a, 193b, 194, 195, 196, 197, 300, 1031) zugeordnet sind, wobei die Vielzahl von Clientvorrichtungen eine gemeinsam genutzte Netzwerkressource gemeinsam nutzt; und
Bestimmen, ob die Anzahl der Clientvorrichtungen, die die gemeinsam genutzte Netzwerkressource gemeinsam nutzt, geändert werden soll basierend auf einer Bewertung einer Kombination der Teilnehmerrichtliniengrenzwerte und der Netzwerkleistungskennwerte und/oder der Datenverkehrsqualitätsindikatorenwerte der gemeinsam genutzten Ressource, die der Vielzahl von Clientvorrichtungen zugeordnet sind.

13. Verfahren (500, 600, 700, 800, 900) nach Anspruch 12, das ferner Folgendes umfasst:
Erzeugen von Zeitverteilungen der Netzwerkleistungskennwerte und/oder der Datenverkehrsqualitätsindikatorenwerte der gemeinsam genutzten Ressource, die der Vielzahl von Clientvorrichtungen (191, 192, 193a, 193b, 194, 195, 196, 197, 300, 1031) zugeordnet sind, wobei jede erzeugte Zeitverteilung repräsentativ für einen Vorhersageindikator ist;
Erzeugen eines gemeinsam genutzten Netzwerkressourcenverschlechterungswerts unter Verwendung der Zeitverteilungen; und
Bestimmen, ob eine zusätzliche Clientvorrichtung den gemeinsamen Zugriff auf die gemeinsam genutzte Netzwerkressource durch Bewertung der potenziellen Leistungsverschlechterung erhalten soll, die durch die zusätzliche Clientvorrichtung für die Vielzahl von Clientvorrichtungen verursacht wird, unter Verwendung des gemeinsam genutzten Netzwerkressourcenverschlechterungswerts, oder Verfahren nach Anspruch 12, das ferner Folgendes umfasst:
Identifizieren einer oder mehrerer Prioritätsstufen innerhalb der Vielzahl von Clientvorrichtungen unter Verwendung der Teilnehmerrichtliniengrenzwerte, wobei die eine oder die mehreren Prioritätsstufen definieren, welche Clientvorrichtungen für andere Clientvorrichtungen innerhalb eines Teilnehmerstufenmodells höher oder niedriger sind;
Auswählen eines oder mehrerer Netzwerkleistungskennwerte für Clientvorrichtungen innerhalb mindestens einer Prioritätsstufe; und
Bestimmen, ob der Zugriff auf die gemeinsam genutzte Netzwerkressource für eine der Vielzahl von Clientvorrichtungen aufgehoben werden soll oder nicht, basierend auf einer Bewertung der ausgewählten einen oder mehreren Netzwerkleistungskennwerte.

14. Vorrichtung, die Folgendes umfasst:
Logik, die dafür konfiguriert ist, ein Verfahren (500, 600, 700, 800, 900) nach einem der vorhergehenden Ansprüche auszuführen.

15. Computerprogrammprodukt, das Anweisungen umfasst, die, wenn sie von einem Prozessor (115, 135, 316) ausgeführt werden, bewirken, dass eine Vorrichtung so arbeitet, dass sie ein Verfahren (500, 600, 700, 800, 900) nach einem der Ansprüche 1 bis 13 ausführt.

## Revendications

1. Procédé (500, 600, 700, 800, 900) consistant à :
déterminer une pluralité de valeurs de caractérisation de performances de réseau associées à une pluralité respective de dispositifs clients (191, 192, 193a, 193b, 194, 195, 196, 197, 300, 1031),
chaque valeur de caractérisation de performances de réseau fournissant une caractérisation quantitative correspondante de facteurs qui influencent une qualité d'expérience associée à l'utilisation de données de contenu multimédia (114) qui sont reçues par un dispositif client respectif de la pluralité de dispositifs clients, et
chaque valeur de caractérisation de performances de réseau étant basée sur au moins un indicateur métrique de perception qui est généré pour les données de contenu multimédia reçues en fonction d'un niveau de performances prédéterminé et d'un niveau de performances réel obtenu au niveau du dispositif client respectif ;
générer une ou plusieurs valeurs indicatrices de qualité de trafic de ressources partagées, associées à un ou plusieurs dispositifs clients de la pluralité de dispositifs clients (191, 192, 193a, 193b, 194, 195, 196, 197, 300, 1031), chaque valeur indicatrice de qualité de trafic de ressources partagées caractérisant une partie d'un réseau (120, 140) sur la base d'une évaluation de la pluralité de valeurs de caractérisation de performances de réseau en rapport avec une ou plusieurs valeurs de capacité d'une ou plusieurs ressources de réseau partagées respectives ; et
gérer une affectation de ressources partagées sur la base de la ou des valeurs indicatrices de qualité de trafic de ressources partagées.

2. Procédé (500, 600, 700, 800, 900) selon la revendication 1, dans lequel les facteurs qui caractérisent une qualité d'expérience incluent au moins un facteur parmi un rapport signal de crête-bruit, un score d'opinion moyen, un indicateur métrique de qualité vidéo des données de contenu multimédia (114) reçues, un taux de codage et des données de niveau d'abonnement, ou dans lequel les facteurs qui caractérisent une qualité d'expérience incluent un indicateur de la continuité avec lequel les données de contenu multimédia sont utilisées par un dispositif client respectif associé à un niveau d'abonnement particulier.

3. Procédé (500, 600, 700, 800, 900) selon la revendication 1, consistant en outre à sélectionner une fenêtre d'observation pendant laquelle déterminer la pluralité de valeurs de caractérisation de performances de réseau et générer la ou les valeurs indicatrices de qualité de trafic de ressources partagées, ou dans lequel l'au moins un indicateur métrique de perception qui est généré pour les données de contenu multimédia (114) reçues en fonction du niveau de performances prédéterminé et du niveau de performances réel comprend un indicateur métrique parmi :
une valeur indicatrice de niveau de préférence de lecture, générée en fonction d'un niveau de préférence de lecture prédéterminé et d'un niveau de lecture réel ;
une valeur indicatrice de capacité de lecture, générée en fonction d'une capacité de lecture prédéterminée et d'une capacité de lecture réelle ;
une valeur indicatrice de tolérance à la dégradation, générée en fonction d'un niveau de tolérance à la dégradation prédéterminé et d'un niveau de dégradation réel ; ou
une valeur indicatrice de niveau de mémoire tampon, générée en fonction d'une capacité de mémoire tampon prédéterminé et d'une capacité de mémoire tampon utilisée réelle.

4. Procédé (500, 600, 700, 800, 900) selon la revendication 1, consistant en outre à sélectionner une partie du réseau où déterminer la pluralité de valeurs de caractérisation de performances de réseau et générer la ou les valeurs indicatrices de qualité de trafic de ressources partagées, et dans lequel la pluralité de dispositifs clients partagent une ou plusieurs des ressources de réseau partagées sur la partie sélectionnée du réseau, le procédé consistant éventuellement en outre à sélectionner ou identifier la pluralité de dispositifs clients (191, 192, 193a, 193b, 194, 195, 196, 197, 300, 1031) au moyen d'une ou plusieurs valeurs indicatrices contextuelles, les valeurs indicatrices contextuelles incluant au moins des données parmi des données géographiques, des données de type de contenu et des données d'abonné qui sont associées à la pluralité de dispositifs clients, ou le procédé consistant en outre à déterminer, sur la base de la ou des valeurs indicatrices de qualité de trafic de ressources partagées, si la partie du réseau a la capacité ou non de fournir les données de contenu multimédia à des niveaux de qualité de perception acceptables aux dispositifs clients ; et dans lequel la gestion consiste en outre à gérer l'affectation de ressources de réseau partagées sur la base de la détermination, et éventuellement dans lequel la gestion de l'affectation consiste en outre à accorder ou refuser l'accès d'un nouveau dispositif client aux ressources de réseau partagées sur la base de la détermination.

5. Procédé (500, 600, 700, 800, 900) selon la revendication 1, dans lequel la détermination de la pluralité de valeurs de caractérisation de performances de réseau inclut au moins une des étapes suivantes consistant à :
recevoir un ou plusieurs indicateurs métriques de perception associés à au moins quelques dispositifs clients de la pluralité de dispositifs clients ; et
générer un ou plusieurs indicateurs métriques de perception en surveillant un trafic de réseau associé à au moins quelques dispositifs clients de la pluralité de dispositifs clients,
chaque indicateur métrique de perception caractérisant quantitativement un facteur qui influence la qualité d'expérience associée à l'utilisation de données de contenu multimédia (114) par un dispositif client respectif.

6. Procédé (500, 600, 700, 800, 900) selon la revendication 5, dans lequel la détermination de la pluralité de valeurs de caractérisation de performances de réseau consiste à agréger deux indicateurs métriques de perception ou plus associés à un dispositif client de la pluralité de dispositifs clients (191, 192, 193a, 193b, 194, 195, 196, 197, 300, 1031) afin de produire une valeur de caractérisation de performances de réseau respective de la pluralité de valeurs de caractérisation de performances de réseau.

7. Procédé (500, 600, 700, 800, 900) selon la revendication 5, dans lequel la réception du ou des indicateurs métriques de perception consiste à recevoir le ou les indicateurs métriques de perception en provenance d'au moins un dispositif parmi un dispositif de réseau, un module d'administration et un emplacement de mémoire non temporaire.

8. Procédé selon la revendication 5, dans lequel la surveillance du trafic de réseau consiste à réaliser une inspection de paquet exhaustive sur des paquets destinés à ou en provenance d'un ou plusieurs dispositifs clients de la pluralité de dispositifs clients (191, 192, 193a, 193b, 194, 195, 196, 197, 300, 1031) afin de générer un ou plusieurs indicateurs métriques de perception.

9. Procédé (500, 600, 700, 800, 900) selon la revendication 5, dans lequel un indicateur métrique de perception respectif du ou des indicateurs métriques de perception, associé à un dispositif client respectif, caractérise au moins un paramètre parmi un niveau de préférence de lecture, une capacité de lecture, une tolérance à la dégradation, une ou plusieurs stratégies de dégradation, un critère de niveau de mémoire tampon et un critère d'utilisation de bande passante, associés au dispositif client respectif.

10. Procédé (500, 600, 700, 800, 900) selon la revendication 5, dans lequel au moins un du ou des indicateurs métriques de perception inclut un indicateur de performances relatif associé à un critère de performances.

11. Procédé (500, 600, 700, 800, 900) selon la revendication 1, dans lequel la génération de la ou des valeurs indicatrices de qualité de trafic de ressources partagées consiste à utiliser un ou plusieurs indicateurs contextuels en réalisant au moins une des étapes suivantes consistant à :
obtenir la ou les valeurs indicatrices contextuelles ;
générer un filtre de sélection à partir de la ou des valeurs indicatrices contextuelles ; et
utiliser le filtre de sélection afin de sélectionner des valeurs de caractérisation de performances de réseau, le procédé consistant éventuellement en outre à agréger les valeurs de caractérisation de performances de réseau sélectionnées afin de produire la ou les valeurs indicatrices de qualité de trafic de ressources partagées, l'agrégation consistant éventuellement à générer une combinaison pondérée des deux indicateurs métriques de perception ou plus ou à générer une combinaison normalisée de deux indicateurs métriques de perception ou plus.

12. Procédé (500, 600, 700, 800, 900) selon la revendication 1, consistant en outre à :
obtenir des limites de stratégie d'abonné associées à la pluralité de dispositifs clients (191, 192, 193a, 193b, 194, 195, 196, 197, 300, 1031), la pluralité de dispositifs clients partageant une ressource de réseau partagée ; et
déterminer s'il faut modifier ou non le nombre de dispositifs clients partageant la ressource de réseau partagée sur la base d'une évaluation d'une combinaison des limites de stratégie d'abonné et d'au moins des valeurs parmi les valeurs de caractérisation de performances de réseau et les valeurs indicatrices de qualité de trafic de ressources partagées associées à la pluralité de dispositifs clients.

13. Procédé (500, 600, 700, 800, 900) selon la revendication 12, consistant en outre à :
générer des distributions temporelles d'au moins des valeurs parmi les valeurs de caractérisation de performances de réseau et les valeurs indicatrices de qualité de trafic de ressources partagées associées à la pluralité de dispositifs clients (191, 192, 193a, 193b, 194, 195, 196, 197, 300, 1031), chaque distribution temporelle générée étant représentative d'un indicateur prédictif ;
générer une valeur de dégradation de ressources de réseau partagées au moyen des distributions temporelles ; et
déterminer s'il faut ou non permettre un accès partagé d'un dispositif client supplémentaire à la ressource de réseau partagée en évaluant la dégradation de performances potentielle causée par le dispositif client supplémentaire à la pluralité de dispositifs clients au moyen de la valeur de dégradation de ressources de réseau partagées, ou procédé selon la revendication 12, consistant en outre à :
identifier un ou plusieurs niveaux de priorité dans la pluralité de dispositifs clients au moyen des limites de stratégie d'abonné, le ou les niveaux de priorité définissant les dispositifs clients qui sont supérieurs ou inférieurs à d'autres dispositifs clients dans un modèle de niveau d'abonnement;
sélectionner une ou plusieurs valeurs de caractérisation de performances de réseau pour des dispositifs clients dans au moins un niveau de priorité ; et
déterminer s'il faut ou non cesser l'accès à la ressource de réseau partagée pour un dispositif client de la pluralité de dispositifs clients sur la base d'une évaluation de la ou les valeurs de caractérisation de performances de réseau sélectionnées.

14. Appareil comprenant :
une logique configurée pour réaliser un procédé (500, 600, 700, 800, 900) selon l'une quelconque des revendications précédentes.

15. Produit de programme informatique comprenant des instructions qui, lorsqu'elles sont exécutées par un processeur (115, 135, 316), amènent un dispositif à fonctionner pour réaliser un procédé (500, 600, 700, 800, 900) selon l'une quelconque des revendications 1 à 13.
